# EUROPEAN PATENT SPECIFICATION

(11) **EP 3 672 455 B1**
(45) Date of publication and mention of the grant of the patent: **08.11.2023**
(21) Application number: 18745879.9
(22) Date of filing: 20.07.2018
(51) Int. Cl.: A47J 27/21, H05B 1/02

(54) **A SMART AND QUIET LIQUID HEATER**
INTELLIGENTER UND LEISER FLÜSSIGKEITSERHITZER
CHAUFFE-LIQUIDE INTELLIGENT ET SILENCIEUX

(30) Priority: 23.08.2017 TR 201712558
(43) Date of publication of application: 01.07.2020
(73) Proprietor: Arçelik Anonim Sirketi, 34445 Istanbul (TR)
(72) Inventor: TARKUC, Simge, 34950 Istanbul (TR); YESILCUBUK, Suleyman Alper, 34950 Istanbul (TR); MEMIC, Tutku Nur, 34950 Istanbul (TR); BERKEM, Alphan, 34950 Istanbul (TR); TURK, Emre Yavuz, 34950 Istanbul (TR); CETIN, Onur, 34950 Istanbul (TR)
(86) International application number: PCT/EP2018/069782
(87) International publication number: WO 2019/037978

(56) References cited:
- WO-A2-2008/119966
- CN-U- 204 207 577
- DE-U1- 29 806 373

## Description

The present invention relates to a smart liquid heater that realizes the heating/boiling processes quickly and operates quietly.

The liquid heaters operate at a constant power independent of the amount of water filled into the receptacle therein. Thus, the amount of time spent for heating/boiling a liquid is directly proportional to the amount of liquid. There are embodiments wherein a plurality of heating elements are used and the heating elements are arranged on the lateral surfaces of the receptacle. However, in this type of liquid heaters, heating/boiling process is performed independent of the liquid amount and an excessive amount of energy is consumed when the amount of water to be processed is relatively small. Furthermore, when the heating elements are provided on the lateral surfaces of the receptacle, the minimum amount of liquid that can be heated/boiled is more than the minimum amount when the heating elements are provided only at the base of the receptacle, and heating/boiling smaller amounts of liquid than said minimum amount of liquid leads to safety problems. Furthermore, when the heating elements provided in the liquid receptacle or at the base thereof are activated, a temperature difference between the heating element and the liquid is observed. As the heat transfer is slow, the temperature of the lower region close to the base is higher than the upper region away from the base. The heating element enables the formation of small vapor bubbles by providing a plurality of nucleation areas for the formation of bubbles. These bubbles are held down and precipitate upon reaching layers at lower temperatures. A loud sound is generated during this precipitation (in addition to the sound of the boiling). The sound is generated upon the activation of the heating element and it is known that this sound is at a level that disturbs the users. Among the liquid heaters in the prior art, the devices with the lowest sound level are 79 dB and the sound level may reach 95 dB. In state of the art liquid heaters, the heating elements are arranged in the receptacle or at the base of the receptacle.

In the state of the art Utility Model Document No. CN204483843 (U), a water heater is disclosed, wherein the heaters are disposed on the lateral surface of the water receptacle. As the heaters are disposed on the lateral surface of the receptacle, the heat dissipation occurs homogeneously and the level of the sound generated during the operation of the water heater is decreased.

In the state of the art Utility Model Document No. CN204363736 (U), the heating plate is arranged at the base of the water receptacle. Heat transfer tubes that extend upwards are provided on the lateral surface of the water receptacle. The water heater operates more quietly as the heat dissipation in the water receptacle occurs homogeneously and quickly.

In the state of the art Utility Model Document No. CN204207577 (U), an electric kettle is disclosed wherein, a plurality of water level sensors and a plurality of heating areas which are matched with the water level sensors are arranged on the side wall of a liner of the electric kettle.

WO-A2-2008/119966 also discloses a kettle comprising a plurality of heating elements and a level sensor, wherein the heating operation is only allowed if a predetermined minimum level of liquid is present in the kettle.

The state of the art methods aim to increase the rate of heat dissipation in the liquid in the heater and comprise heating surfaces or heat transfer tubes on the lateral surface of the water receptacle.

The aim of the present invention is the realization of a liquid heater wherein different amounts of liquids are heated/boiled in the same amount of time.

The liquid heater realized in order to attain the aim of the present invention, explicated in the first claim and the respective claims thereof comprises a control unit that, based on the data received from a level sensor measuring the liquid level, enables at least two of a plurality of heating elements arranged on the lateral surface and preferably also on the base of the body to be operated if the liquid level is higher than a first predetermined limit level. By determining the number of heating elements to be operated based on the liquid level, different amounts of liquids are enabled to be heated/boiled in the same amount of time without creating safety problems and without increasing the minimum amount of liquid that can be heated.

In an embodiment of the present invention, the control unit activates all the heating elements remaining below the liquid level to enable especially high amounts of liquids to be heated/boiled more quickly. Thus, the heating elements arranged along the lateral surface of the body are activated based on the liquid level, and different amounts of liquids are heated/boiled in almost the same amount of time.

In an embodiment of the present invention, the control unit increases the power supplied to the heating elements if the liquid level is above a second limit level. For example, a single heating element is operated with a power of 200 W for heating 200 ml of water, and four heating elements are operated with a power of 250 W for heating 1000 ml of water, and thus, different amounts of liquids are enabled to be heated/boiled in almost the same amount of time.

In another embodiment of the present invention, the body wherein the liquids are heated/boiled is double-walled, and the heating elements provided on the lateral surface of the body are arranged between the walls. Possible safety problems are prevented by positioning the heating elements at a safe position between the walls. Furthermore, the heat transfer between the interior of the body and the outer environment is decreased and the insulation provided thus enables the heating/boiling process to be completed more quickly.

In another embodiment of the present invention, high amounts of liquids are enabled to be heated/boiled more quickly by means of a movement mechanism that enables the heating elements on the lateral surfaces of the body to be moved up and down. Moving the heating elements on the lateral surface of the body up to the liquid level provides a quicker heating/boiling process, and heating the liquid homogeneously provides a quieter heating/boiling process.

In another embodiment of the present invention, the movement mechanism comprises a shaft in the form of a worm gear rotated by a motor, and a plurality of holders each supporting one heating element, wherein the holder is detachably attached to the shaft and has a movable mode wherein the holder is attached to the shaft and a stationary mode wherein the holder is detached from the shaft. The holders move up and down in the movable mode wherein the same are attached to the shaft, and thus, by means of a low cost movement mechanism, the heating elements perform the heating process at a desired level along the lateral surface of the body.

In different embodiments of the present invention, the control unit controls the movement mechanism so as to move the uppermost holder among the holders placed one above the other up to the liquid level. In another version of this embodiment, the control unit enables one of the holders other than the lowermost and the uppermost one to be moved to almost half the level of the liquid. Thus, the heating/boiling process is enabled to be completed in the same amount of time regardless of the amount of liquid.

In another embodiment of the present invention, similar to the embodiment above, the control unit enables the liquid level to be determined by means of the level sensor, and enables the holders and hence the heating elements to be arranged on the lateral surface of the body at equal intervals along the height of the liquid. In this embodiment, by arranging the heating elements at equal intervals along the surfaces of the body in contact with the liquid, the heating/boiling process is performed in the same amount of time and quietly regardless of the liquid level.

In another embodiment of the present invention, upon the completion of the heating/boiling process, the control unit controls the movement mechanism so as to enable the holders to be brought to the lowermost position and parked in the stationary mode. In another version of this embodiment, the control unit uses the level sensor and monitors the user preference by storing the liquid levels in a predetermined number of previous heating/boiling processes. Furthermore, the control unit calculates the average liquid level of the heating/boiling process and enables, based on the average liquid level, the holders to be arranged at equal intervals along the lateral surface of the body. Thus, the need for spending time to move up the heating elements in the next heating/boiling process is eliminated.

In another embodiment of the present invention, the user can select the number of heating elements to be used in the liquid heating/boiling process and the power to be supplied thereto, provided that the liquid level is above the first limit level. Thus, by allowing the user to control the heating/boiling process, user satisfaction is increased.

In different embodiments of the present invention, resistance heaters and/or film heaters are used as the heating element. Preferably resistance type heaters are used at the base of the body, and if there is a movement mechanism, resistance type heaters are used on the side walls of the body, and, otherwise, film type heaters are used.

By means of the liquid heater of the present invention, different amounts of liquids are enabled to be heated/boiled in the same amount of time by controlling the positions and the powers of the heating elements. As the positions of the heating elements can be changed, the liquid is heated homogeneously and a quieter heating/boiling is provided compared to the liquid heaters in the prior art. As the positions of the heating elements can be changed according to the liquid levels, every heating/boiling process can be performed in the same amount of time regardless of the liquid level.

The smart and quiet liquid heater realized in order to attain the aim of the present invention is illustrated in the attached figures, where:

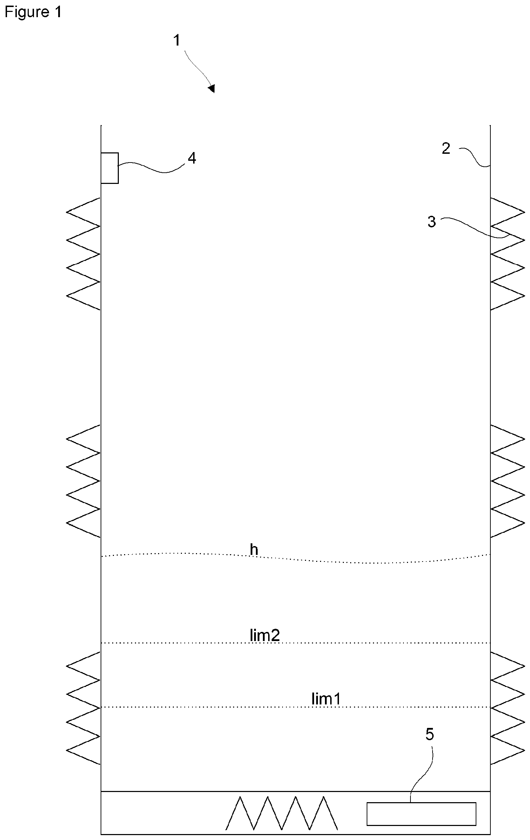

Figure 1- is the schematic view of the liquid heater related to an embodiment of the present invention.

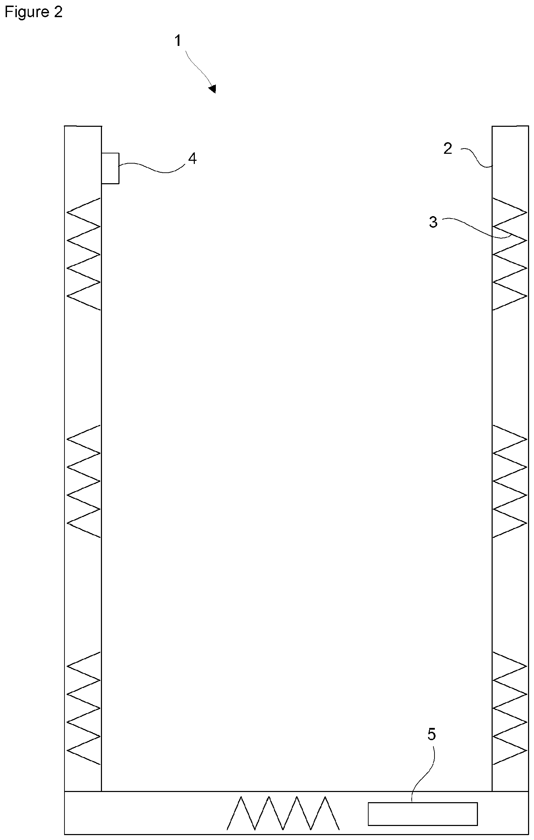

Figure 2- is the schematic view of the liquid heater with the double-walled body related to another embodiment of the present invention.

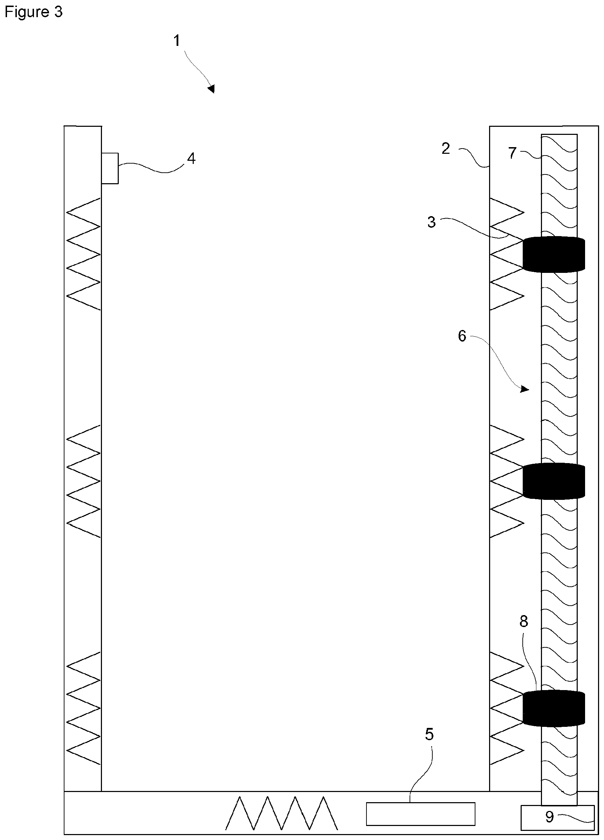

Figure 3- is the schematic view of the liquid heater with the movement mechanism related to another embodiment of the present invention.

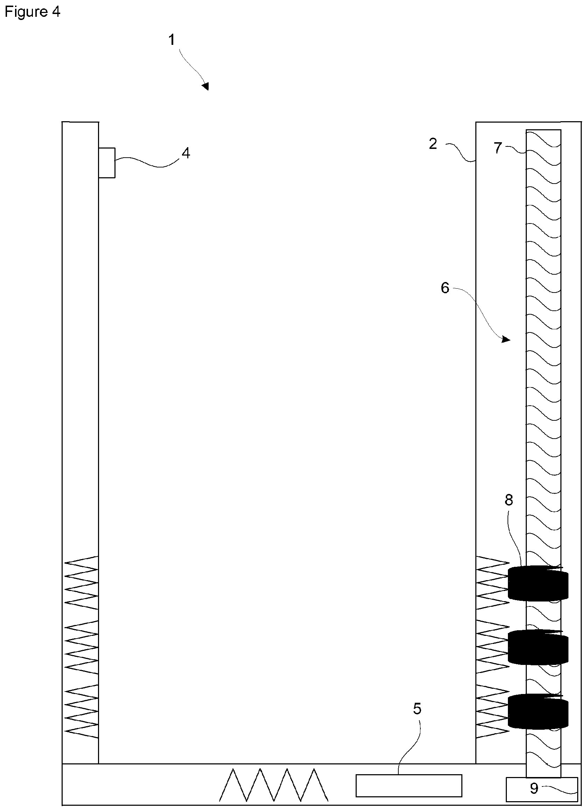

Figure 4- is the schematic view of the liquid heater related to an embodiment of the present invention, wherein the holders are in the stationary mode.

The elements illustrated in the figures are numbered as follows:
1. Liquid heater
2. Body
3. Heating element
4. Level sensor
5. Control unit
6. Movement mechanism
7. Shaft
8. Holder
9. Motor

The following symbols are used so that the present invention is understood better:
Lim1: First limit level value
Lim2: Second limit level value
h: Liquid level

The liquid heater (1) comprises a body (2) wherein the heating/boiling process is performed; a plurality of heating elements (3) that are arranged on the side walls and preferably also at the base of the body (2), and at least one level sensor (4) that enables the liquid level (h) in the body (2) to be measured. The liquid to be heated/boiled is filled into the body (2) preferably by the user and as the user presses the start button, the heating elements (3) are activated and the heating/boiling process is started. The level sensor (4) detects the level (h) of the liquid filled into the body (2). The level sensor (4) may be a float type, an optical type or an electromagnetic type sensor.

The liquid heater (1) of the present invention comprises a control unit (5) that enables at least two heating elements (3) to be operated if the liquid level (h) detected by the level sensor (4) is higher than a predetermined first limit level (lim1). The control unit (5) enables the liquid level (h) in the body (2) to be measured by means of the level sensor (4) upon receiving the heating/boiling start command that is entered by the user or generated automatically. The measured liquid height (h) is compared to the first limit level (lim1) prestored in the memory of the control unit (5) by the producer. Based on the result of the comparison, the control unit (5) enables the heating/boiling process to be quickly completed by activating at least two heating elements (3) if the measured liquid level (h) is higher than the first limit level (lim1). Thus, the heating/boiling process is expedited by using a plurality of heating elements (3) for amounts of liquids higher than a certain value, and an efficient heating/boiling is performed without increasing the power consumption by using a single hating element (3) for low amounts of liquids. Furthermore, the liquid heating elements (3) can process only a certain minimum amount of liquid according to the safety standards, and the minimum amount of liquid that can be heated/boiled is prevented from increasing by using a single heating element for liquid levels lower than the first limit level (lim1).

In an embodiment of the present invention, the control unit (5) enables all the heating elements (3) below the liquid level (h) to be activated based on the data received from the level sensor (4). In this embodiment, after the level sensor (4) completes measuring the level, the control unit (5) enables the liquid to be heated/boiled as quick as possible by activating the heating elements (3) on the lateral surfaces of the body (2) that are below the liquid level (h), and if available, the heating element (3) at the base of the body (2). By means of this embodiment, 1500 ml of water is boiled in the same amount of time as the time required for a liquid heater in the prior art to boil 500 ml of water.

In another embodiment of the present invention, the control unit (5) increases the power supplied to the heating elements (3) if the liquid level (h) is above a predetermined second limit level (lim2). In this embodiment, as the liquid level (h) increases, the power supplied to the heating elements (3) is increased and every heating/boiling process is completed in the same amount of time. By means of this embodiment, for liquid amounts higher than the second limit level (lim2), the heating elements (3) are enabled to be operated at higher power by supplying a higher current than normal and thus, the liquids are enabled to be heated/boiled in the same amount of time regardless of the liquid levels (h). The first limit level (lim1) and the second limit level (lim2) are two independent different limit values without a correlation therebetween, and can be equal in different embodiments.

In another embodiment of the present invention, the liquid heater (1) comprises the double-walled body (2) and at least one heating element (3) arranged between the walls on the lateral surface of the body (2). The body (2) is double-walled and can be produced from plastic, glass or metal material. The heating elements (3) on the lateral surfaces of the body (2) are arranged between the walls. Thus, the safety standards are met and an aesthetic appearance is obtained by hiding the heating elements (3) between the walls.

In the present invention, the liquid heater (1) comprises a movement mechanism (6) that is controlled by the control unit (5) and that enables the heating elements (3) on the lateral surfaces of the body (2) to be moved up and down. The heating elements (3) are moved up and down along the lateral surface of the body (2) by means of the movement mechanism (6) in order to enable the heating/boiling processes to be performed in a quicker and quieter manner. By enabling the heating elements (3) to be moved up to the highest level of the liquid, high amounts of liquid are enabled to be heated/boiled in a quiet and homogeneous manner, and by using a plurality of heating elements (3) for low amounts of liquids, the process is completed quickly by heating/boiling the liquid at a plurality of zones instead of a single zone. The aim of the present invention can be attained by embodiments other than the embodiment explained below as well, wherein different movement mechanisms (6) enable the heating elements (3) to be moved in the vertical direction.

In another embodiment of the present invention, the movement mechanism (6) comprises a shaft (7) in the form of a worm gear extending on the lateral surface of the body (2) along the height of the body (2) in the vertical direction; at least one holder (8) whereon a heating element (3) is fixed, that has a movable mode (7) wherein the holder (8) is movably attached to the shaft (7) and a stationary mode wherein the holder (8) is detached from the shaft (7) and kept stationary at the lowest level, and a motor (9) that enables the shaft (7) to be rotated. The movement mechanism (6) is situated on the lateral surface of body (2). Each heating element (3) is integrated with a holder (8). The holders (8) have a movable mode wherein the holders (8) are attached/connected to the shaft (7) so as to be moved up and down along the shaft (7), and a stationary mode wherein the holders (8) are separated from the shaft (7) and parked preferably at the lowest part of the shaft (7). The holders (8) are preferably placed one above the other and are moved so as to be integrated with the shaft (7) in order, in other words, such that gaps remain therebetween. The motor (9) rotates the shaft (7), and the holders (8) in the movable mode move up and down along the shaft (7) while the holders (8) in the stationary mode are preferably kept at the lowest position. The holders (8) are switched between the stationary mode and the movable mode by means of state of the art detachable connection methods such as magnetic actuation.

In another embodiment of the present invention, the control unit (5) controls the movement mechanism (6) based on the data received from the level sensor (4) and switches at least one holder (8) from the stationary mode to the movable mode by being attached to the shaft (7) so as to enable the heating element (3) to be moved almost up to the liquid level (h). In this embodiment, at the beginning of the heating/boiling process, the control unit (5) detects the liquid level (h) by means of the level sensor (4) and enables the shaft (7) to be rotated by means of the motor (9) so as to switch preferably the uppermost holder (8) from the stationary mode to the movable mode, thus moving the holder (8) up to the liquid level (h). By moving the heating element (3) on the holder (8) up to the liquid level (h), the liquid is enabled to be heated homogeneously and thus, the liquid is enabled to be heated/boiled quicker and a quieter process can be performed by means of the homogeneous heating.

In another embodiment of the present invention, the control unit (5) enables the heating element (3) to be moved up to a level that is almost half the total liquid level (h) by using the movement mechanism (6). Parallel to the embodiment disclosed above, the control unit (5) provides a homogeneous and quicker heating/boiling process by moving another holder (8) up to a level that is almost half the liquid level (h). In the embodiment wherein both embodiments are combined, first the uppermost holder (8) is switched to the movable mode and the shaft (7) is rotated, and when the holder (8) reaches a level that is almost half the liquid level (h), the next holder (8) is switched to the movable mode. Thus, when the uppermost holder (8) reaches the liquid level (h), the other holder (8) reaches a height that is almost half the liquid level (h).

In another embodiment of the present invention, based on the liquid level (h) in the body (2), the control unit (5) enables the heating elements (3) to be arranged at equal intervals such that the lowermost holder (8) is kept stationary and the uppermost holder (8) is moved almost up to the liquid level (h) by means of the movement mechanism (6). In this embodiment, the control unit (5) detects the liquid level (h) by means of the level sensor (4) and enables the holders (8) to be arranged at equal intervals in the vertical direction along the lateral surface of the body (2). The control unit (5) divides the liquid level (h) by one less than the number of heating elements (3), i.e. the number of holders (8), and each holder (8) is switched from the stationary mode to the movable mode and moved up by means of the shaft (7) after the previous holder (8) is moved up by a height that is the result of the division. For example, in the liquid heater (1) with three holders (8), the control unit (5) divides the liquid height (h) by two and after moving up the uppermost holder (8) to a level that is half the liquid level (h), switches the next holder (8) to the movable mode and rotates the shaft (7) until the uppermost holder (8) reaches the liquid level (h). As the number of holders (8) and hence the number of heating elements (3) increases, the distance between the heating elements (3) decreases and the liquid is heated/boiled along the surfaces where the liquid is in contact with the body (2).

In another embodiment of the present invention, the control unit (5) enables the holders (8) to be switched to the stationary mode by moving the heating elements (3) downwards after the boiling of the liquid is completed. By means of this embodiment, a safety measure is taken by moving the heating elements (3) to the lowest level and preventing the lateral surfaces of the body (2) that are not in contact with the liquid from being heated in case smaller amounts of liquids are used in the subsequent heating/boiling processes. In a version of this embodiment, the control unit (5) does not allow the holders (8) at a raised position on the shaft (7) to be switched to the stationary mode and prevents the holders (8) from falling down.

In another embodiment of the present invention, the control unit (5) stores the level sensor (4) data during the heating/boiling processes and calculates the average liquid level (h) of a predetermined number of previous heating/boiling processes, and thus, controls the holders (8) during the heating/boiling process so as to enable the heating elements (3) to be arranged at equal intervals based on the average liquid level (h). By means of this embodiment, the control unit (5) continuously monitors the liquid level (h) during the heating/boiling processes and determines the user preference, thus enabling the holders (8), namely the heating elements (3) to be positioned based on the average liquid level (h). Thus, the heating/boiling process can be started immediately when the user fills the body (2) with the same amount of water as before and starts the heating/boiling process.

In another embodiment of the present invention, the control unit (5) determines the number of heating elements (3) to be activated during the heating/boiling process based on the user preferences. In this embodiment, the user is provided with the option to select the number of heating elements (3) to be used regardless of the liquid level (h), provided that the liquid level (h) is higher than the first limit level (lim1). Thus, the user can bypass the heating/boiling protocol and perform the heating process quickly when in a hurry or choose a more controlled process by enabling the liquid to be heated/boiled slowly.

In another embodiment of the present invention, the heating element (3) is a resistant type heater disposed at the base of the body (2). In a different embodiment of the present invention, at least one of the heating elements (3) is a resistance type heater disposed on the lateral surface of the body (2). In the alternative embodiments of the present invention, at least one of the heating elements (3) is a film type heater disposed on the lateral surface of the body (2). Different embodiments disclosed above can be realized by using heating elements (3) that are resistance type or film type heaters. In the embodiments wherein the movement mechanism (6) is used, the heating elements (3) arranged on the holders (8) must be resistance type heaters. The heating elements (3) arranged on the lateral surface of the body (2) surround all around the body (2) whether the heating elements (3) are resistance type or film type. In the embodiments wherein the movement mechanism (6) is used, it is sufficient that the holders (8) hold the heating elements (3) only at a single point.

By means of the present invention, by heating the liquid in the body (2) by means of a plurality of heating elements (3) along all the surfaces in contact with the body (2), different amounts of liquids can be heated/boiled in the same amount of time. Thus, the need for the user to wait for a long time to heat/boil high amounts of liquids is eliminated.

## Claims

1. A liquid heater (1) **comprising** a body (2) wherein the heating/boiling process is performed; a plurality of heating elements (3) that are arranged on the side walls and preferably also at the base of the body (2), and at least one level sensor (4) that enables the liquid level (h) in the body (2) to be measured, a control unit (5) that enables at least two heating elements (3) to be operated if the liquid level (h) detected by the level sensor (4) is higher than a predetermined first limit level (lim1) **characterized by** the liquid heater further comprising a movement mechanism (6) that is controlled by the control unit (5) and that enables the heating elements (3) on the lateral surfaces of the body (2) to be moved up and down.

2. A liquid heater (1) as in Claim 1, **characterized by** the control unit (5) that enables all the heating elements (3) below the liquid level (h) to be activated based on the data received from the level sensor (4).

3. A liquid heater (1) as in Claim 1 or 2, **characterized by** the control unit (5) that increases the power supplied to the heating elements (3) if the liquid level (h) is above a predetermined second limit level (lim2).

4. A liquid heater (1) as in any one of the above claims, **characterized by** the body being a double-walled body (2) and by at least one heating element (3) being arranged on the lateral surface of the body (2) between the walls.

5. A liquid heater (1) as in Claim 1, **characterized by** the movement mechanism (6) comprising a shaft (7) in the form of a worm gear extending on the lateral surface of the body (2) along the height of the body (2) in the vertical direction; at least one holder (8) whereon a heating element (3) is fixed, that has a movable mode wherein the holder (8) is movably attached to the shaft (7) and a stationary mode wherein the holder (8) is detached from the shaft (7) and kept stationary at the lowest level, and a motor (9) that enables the shaft (7) to be rotated.

6. A liquid heater (1) as in Claim 5, **characterized by** the control unit (5) that controls the movement mechanism (6) based on the data received from the level sensor (4) and switches at least one holder (8) from the stationary mode to the movable mode by being attached to the shaft (7) so as to enable the heating element (3) to be moved almost up to the liquid level (h).

7. A liquid heater (1) as in Claim 5, **characterized by** the control unit (5) that enables the heating element (3) to be moved up to a level that is almost half the total liquid level (h) by using the movement mechanism (6).

8. A liquid heater (1) as in Claim 5, **characterized by** the control unit (5) that, based on the liquid level (h) in the body (2), enables the heating elements (3) to be arranged at equal intervals such that the lowermost holder (8) is kept stationary and the uppermost holder (8) is moved almost up to the liquid level (h) by means of the movement mechanism (6).

9. A liquid heater (1) as Claim 5 , **characterized by** the control unit (5) that enables the holders (8) to be switched to the stationary mode by moving the heating elements (3) downwards after the boiling of the liquid is completed.

10. A liquid heater (1) as in any one of Claims 5 to 8, **characterized by** the control unit (5) that stores the level sensor (4) data during the heating/boiling processes and calculates the average liquid level (h) of a predetermined number of previous heating/boiling processes, and thus, controls the holders (8) during the heating/boiling process so as to enable the heating elements (3) to be arranged at equal intervals based on the average liquid level (h).

11. A liquid heater (1) as in any one of the above claims, **characterized by** the liquid heater comprising an interface that provides the user with the option to select the number of heating elements (3) to be used regardless of the liquid level (h), provided that the liquid level (h) is higher than the first limit level (lim1) and wherein the control unit (5) determines the number of heating elements (3) to be activated during the heating/boiling process based on the user preferences.

12. A liquid heater (1) as in any one of the above claims, **characterized by** a resistance type heating element (3) being arranged at the base of the body (2).

13. A liquid heater (1) as in any one of the above claims, **characterized by** at least one resistance type heating element (3) being arranged on the lateral surface of the body (2).

14. A liquid heater (1) as in any one of Claims 1 to 4, **characterized by** at least one film type heating element (3) being arranged on the lateral surface of the body (2).

## Patentansprüche

1. Ein Flüssigkeitserhitzer (1) **umfasst** einen Körper (2), in dem der Erhitzungs-/Siedeprozess durchgeführt wird, mehrere Heizelemente (3), die an den Seitenwänden und vorzugsweise auch am Boden des Körpers (2) angeordnet sind, und mindestens einen Füllstandsensor (4), der eine Messung des Flüssigkeitsspiegels (h) im Körper (2) ermöglicht, eine Steuereinheit (5), die den Betrieb von mindestens zwei Heizelementen (3) ermöglicht, wenn der vom Füllstandsensor (4) erfasste Flüssigkeitsstand (h) höher ist als ein vorgegebener erster Grenzstand (lim1), **gekennzeichnet ist es dadurch,** dass der Flüssigkeitserhitzer weiterhin einen Bewegungsmechanismus (6) umfasst, der von der Steuereinheit (5) gesteuert wird und es ermöglicht, die Heizelemente (3) an den Seitenflächen des Körpers (2) auf und ab zu bewegen.

2. Ein Flüssigkeitserhitzer (1), wie in Anspruch 1 aufgeführt, **ist dadurch gekennzeichnet, dass** die Steuereinheit (5) die Aktivierung aller Heizelemente (3) unterhalb des Flüssigkeitsspiegels (h) basierend auf den vom Füllstandsensor (4) empfangenen Daten ermöglicht.

3. Ein Flüssigkeitserhitzer (1), wie in Anspruch 1 oder 2 aufgeführt, **ist dadurch gekennzeichnet, dass** die Steuereinheit (5) die den Heizelementen (3) zugeführte Leistung erhöht, wenn der Flüssigkeitsstand (h) über einem vorgegebenen zweiten Grenzstand (lim2) liegt.

4. Ein Flüssigkeitserhitzer (1), wie in einem der vorherigen Ansprüchen aufgeführt, **ist dadurch gekennzeichnet, dass** der Körper ein doppelwandiger Körper (2) ist und dass auf der Mantelfläche des Körpers (2) zwischen den Wänden mindestens ein Heizelement (3) angeordnet ist.

5. Ein Flüssigkeitserhitzer (1), wie in Anspruch 1 aufgeführt, **ist dadurch gekennzeichnet, dass** der Bewegungsmechanismus (6) eine Welle (7) in Form eines Schneckengetriebes umfasst, die sich auf der Seitenfläche des Körpers (2) entlang der Höhe des Körpers (2) in vertikaler Richtung erstreckt; mindestens einen Halter (8), an dem ein Heizelement (3) befestigt ist, der einen beweglichen Modus aufweist, wobei der Halter (8) beweglich an der Welle (7) befestigt ist und einen stationären Modus, bei dem der Halter (8) von der Welle (7) gelöst und auf der untersten Ebene stationär gehalten wird, und einen Motor (9), der die Drehung der Welle (7) ermöglicht.

6. Ein Flüssigkeitserhitzer (1), wie in Anspruch 5 aufgeführt, **ist dadurch gekennzeichnet, dass** die Steuereinheit (5) den Bewegungsmechanismus (6) basierend auf den vom Füllstandsensor (4) empfangenen Daten steuert und mindestens einen Halter (8) vom stationären Modus in den beweglichen Modus schaltet, indem es an der Welle (7) befestigt ist, so dass das Heizelement (3) nahezu bis zum Flüssigkeitsspiegel (h) bewegt werden kann.

7. Ein Flüssigkeitserhitzer (1), wie in Anspruch 5 aufgeführt, **ist dadurch gekennzeichnet, dass** die Steuereinheit (5) es ermöglicht, das Heizelement (3) mithilfe des Bewegungsmechanismus (6) bis zu einem Niveau zu bewegen, das nahezu der Hälfte des gesamten Flüssigkeitsniveaus (h) entspricht.

8. Ein Flüssigkeitserhitzer (1), wie in Anspruch 5 aufgeführt, **ist dadurch gekennzeichnet, dass** die Steuereinheit (5), basierend auf dem Flüssigkeitsstand (h) im Körper (2), eine Anordnung der Heizelemente (3) in gleichen Abständen ermöglicht, so dass die unterste Halterung (8) stationär gehalten wird und der oberste Halter (8) mittels des Bewegungsmechanismus (6) nahezu bis zum Flüssigkeitsspiegel (h) bewegt wird.

9. Ein Flüssigkeitserhitzer (1), wie in Anspruch 5 aufgeführt, **ist dadurch gekennzeichnet, dass** die Steuereinheit (5) das Umschalten der Halterungen (8) in den stationären Modus durch Bewegen der Heizelemente (3) nach unten ermöglicht, nachdem das Sieden der Flüssigkeit abgeschlossen ist.

10. Ein Flüssigkeitserhitzer (1), wie in einem der vorherigen Ansprüchen von 5 bis 8 aufgeführt, **ist dadurch gekennzeichnet, dass** die Steuereinheit (5) die Daten des Füllstandsensors (4) während der Heiz-/Kochvorgänge speichert und den durchschnittlichen Flüssigkeitsstand (h) einer vorgegebenen Anzahl vorangegangener Heiz-/Kochvorgänge berechnet und somit die Halterungen (8) während des Erhitzungs-/Kochvorgangs so steuert, dass die Heizelemente (3) basierend auf dem durchschnittlichen Flüssigkeitsstand (h) in gleichen Abständen angeordnet werden können.

11. Ein Flüssigkeitserhitzer (1), wie in einem der vorherigen Ansprüchen aufgeführt, **ist dadurch gekennzeichnet, dass** der Flüssigkeitserhitzer eine Schnittstelle umfasst, die dem Benutzer die Möglichkeit bietet, die Anzahl der zu verwendenden Heizelemente (3) unabhängig vom Flüssigkeitsstand (h) auszuwählen, vorausgesetzt, dass der Flüssigkeitsstand (h) höher ist als der erste Grenzstand (lim1) und wobei die Steuereinheit (5) die Anzahl der während des Heiz-/Kochvorgangs zu aktivierenden Heizelemente (3) basierend auf den Benutzerpräferenzen bestimmt.

12. Ein Flüssigkeitserhitzer (1), wie in einem der vorherigen Ansprüchen aufgeführt, **ist dadurch gekennzeichnet, dass** ein Widerstandsheizelement (3) an der Basis des Körpers (2) angeordnet ist.

13. Ein Flüssigkeitserhitzer (1), wie in einem der vorherigen Ansprüchen aufgeführt, **ist dadurch gekennzeichnet, dass** an der Mantelfläche des Körpers (2) mindestens ein Widerstandsheizelement (3) angeordnet ist.

14. Ein Flüssigkeitserhitzer (1), wie in einem der vorherigen Ansprüchen von 1 bis 4 aufgeführt, **ist dadurch gekennzeichnet, dass** auf der Seitenfläche des Körpers (2) mindestens ein Folienheizelement (3) angeordnet ist.

## Revendications

1. Un réchauffeur de liquide (1) **comprenant** un corps (2) dans lequel le processus de chauffage/ébullition est effectué ; plusieurs éléments chauffants (3) disposés sur les parois latérales et, de préférence, à la base du corps (2), et au moins un capteur de niveau (4) permettant de mesurer le niveau de liquide (h) dans le corps (2), une unité de commande (5) qui permet de faire fonctionner au moins deux éléments chauffants (3) si le niveau de liquide (h) détecté par le capteur de niveau (4) est supérieur à un premier niveau limite prédéterminé (lim1) **caractérisé par le fait que** le réchauffeur de liquide comprend en outre un mécanisme de mouvement (6) qui est commandé par l'unité de commande (5) et qui permet aux éléments chauffants (3) sur les surfaces latérales du corps (2) d'être déplacés vers le haut et vers le bas.

2. Un réchauffeur de liquide (1) selon la déclaration 1, **caractérisé par** l'unité de commande (5) qui permet d'activer tous les éléments chauffants (3) situés sous le niveau de liquide (h) en fonction des données reçues du capteur de niveau (4).

3. Un réchauffeur de liquide (1) selon la déclaration 1 ou 2, **caractérisé par** l'unité de commande (5) qui augmente la puissance fournie aux éléments chauffants (3) si le niveau de liquide (h) est supérieur à un deuxième niveau limite prédéterminé (lim2).

4. Un réchauffeur de liquide (1) selon l'une quelconque des déclarations précédentes, **caractérisé par le fait que** le corps est à double paroi (2) et qu'au moins un élément chauffant (3) est disposé sur la surface latérale du corps (2) entre les parois.

5. Un réchauffeur de liquide (1) selon la déclaration 1, **caractérisé par** le mécanisme de mouvement (6) comprenant un arbre (7) sous la forme d'un engrenage à vis sans fin s'étendant sur la surface latérale du corps (2) le long de la hauteur du corps (2) dans la direction verticale ; au moins un support (8) sur lequel est fixé un élément chauffant (3), qui a un mode mobile dans lequel le support (8) est fixé de manière mobile à l'arbre (7) et un mode stationnaire dans lequel le support (8) est détaché de l'arbre (7) et maintenu stationnaire au niveau le plus bas, et un moteur (9) qui permet de faire tourner l'arbre (7).

6. Un réchauffeur de liquide (1) comme dans la déclaration 5, **caractérisé par** l'unité de commande (5) qui commande le mécanisme de mouvement (6) sur la base des données reçues du capteur de niveau (4) et fait passer au moins un support (8) du mode stationnaire au mode mobile en étant fixé à l'arbre (7) de manière à permettre à l'élément chauffant (3) d'être déplacé presque jusqu'au niveau du liquide (h).

7. Un réchauffeur de liquide (1) comme dans la déclaration 5, **caractérisé par** l'unité de commande (5) qui permet à l'élément chauffant (3) d'être déplacé jusqu'à un niveau qui est presque la moitié du niveau total du liquide (h) en utilisant le mécanisme de mouvement (6).

8. Un réchauffeur de liquide (1) selon la déclaration 5, **caractérisé par** l'unité de commande (5) qui, sur la base du niveau de liquide (h) dans le corps (2), permet aux éléments chauffants (3) d'être disposés à intervalles égaux de sorte que le support le plus bas (8) reste stationnaire et que le support le plus haut (8) soit déplacé presque jusqu'au niveau de liquide (h) au moyen du mécanisme de mouvement (6).

9. Un réchauffeur de liquide (1) selon la déclaration 5, **caractérisé par** l'unité de commande (5) qui permet de faire passer les supports (8) en mode stationnaire en déplaçant les éléments chauffants (3) vers le bas après la fin de l'ébullition du liquide.

10. Un réchauffeur de liquide (1) comme dans l'une des revendications 5 à 8, **caractérisé par** l'unité de commande (5) qui enregistre les données du capteur de niveau (4) pendant les processus de chauffage/ébullition et calcule le niveau moyen de liquide (h) d'un nombre prédéterminé de processus de chauffage/ébullition précédents, et ainsi, contrôle les supports (8) pendant le processus de chauffage/ébullition afin de permettre aux éléments chauffants (3) d'être disposés à intervalles égaux sur la base du niveau moyen de liquide (h).

11. Un réchauffeur de liquide (1) tel que dans l'une quelconque des déclarations précédentes, **caractérisé par le fait que** le réchauffeur de liquide comprend une interface qui offre à l'utilisateur la possibilité de sélectionner le nombre d'éléments chauffants (3) à utiliser indépendamment du niveau de liquide (h), à condition que le niveau de liquide (h) soit supérieur au premier niveau limite (lim1) et dans lequel l'unité de commande (5) détermine le nombre d'éléments chauffants (3) à activer au cours du processus de chauffage/ébullition sur la base des préférences de l'utilisateur.

12. Un réchauffeur de liquide (1) selon l'une quelconque des déclarations précédentes, **caractérisé par** un élément chauffant de type résistance (3) disposé à la base du corps (2).

13. Un réchauffeur de liquide (1) selon l'une quelconque des déclarations précédentes, **caractérisé par le fait qu'**au moins un élément chauffant de type résistance (3) est disposé sur la surface latérale du corps (2).

14. Un réchauffeur de liquide (1) selon l'une quelconque des déclarations 1 à 4, **caractérisé par le fait qu'**au moins un élément chauffant de type film (3) est disposé sur la surface latérale du corps (2).
